(19) Europäisches Patentamt / European Patent Office / Office européen des brevets

(11) **EP 3 155 249 B1**

(12) **FASCICULE DE BREVET EUROPEEN**

(45) Date de publication et mention de la délivrance du brevet:
**13.02.2019 Bulletin 2019/07**

(21) Numéro de dépôt: **15732819.6**

(22) Date de dépôt: **29.05.2015**

(51) Int Cl.:
*F02D 41/00* (2006.01)   *F02D 23/00* (2006.01)
*F02D 21/08* (2006.01)   *F02M 26/00* (2016.01)
*F02D 41/14* (2006.01)   *F02B 37/18* (2006.01)
*F02B 37/24* (2006.01)   *F02M 26/05* (2016.01)

(86) Numéro de dépôt international:
**PCT/FR2015/051419**

(87) Numéro de publication internationale:
**WO 2015/185830 (10.12.2015 Gazette 2015/49)**

(54) **PROCÉDÉ DE PILOTAGE D'UNE VANNE DE RECIRCULATION DES GAZ BRÛLÉS**

VERFAHREN ZUR VENTILSTEUERUNG ZUR RÜCKFÜHRUNG VON ABGASEN

METHOD FOR CONTROLLING A VALVE FOR RECIRCULATING BURNT GASES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.06.2014 FR 1455003**

(43) Date de publication de la demande:
**19.04.2017 Bulletin 2017/16**

(73) Titulaire: **PSA Automobiles SA 78300 Poissy (FR)**

(72) Inventeurs:
• **TAIBALY, Moustansir 92700 Colombes (FR)**
• **TRUTET, Arnaud 78800 Houilles (FR)**

(56) Documents cités:
**DE-B3-102008 036 414   FR-A1- 2 929 997**
**FR-A1- 2 956 160**

• **HILD O ET AL: "DIE REGELSTRECKE EINES PKW-DIESELMOTORS MIT DIREKTEINSPRITZUNG IM HINBLICK AUF LADEDRUCK-UND ABGASRUECKFUEHRREGELUNG", MTZ MOTORTECHNISCHE ZEITSCHRIFT, VIEWEG VERLAG, WIESBADEN, DE, vol. 60, no. 3, 1 mars 1999 (1999-03-01), pages 186-192, XP000802652, ISSN: 0024-8525**
• **ANMANN M ET AL: "Model-Based Control of the VGT and EGR in a Turbocharged Common-Rail Diesel Engine: Theory and Passenger Car Implementation", SAE TECHNICAL PAPER SERIES, SOCIETY OF AUTOMOTIVE ENGINEERS, WARRENDALE, PA, US, vol. 2003-01-0357, 3 mars 2003 (2003-03-03), pages 1-12, XP002592247, ISSN: 0148-7191**

**Description**

**Domaine technique de l'invention**

La présente invention se rapporte au domaine des moteurs à combustion interne. L'invention concerne plus particulièrement un procédé de pilotage d'une vanne de recirculation des gaz brulés. L'invention concerne encore un calculateur adapté à mettre en oeuvre un tel procédé et un véhicule automobile comprenant un moteur à combustion interne équipé d'un tel calculateur.

Les contraintes dues aux normes, par exemple les normes européennes dites Euro VI, relatives aux niveaux d'émissions polluantes générées par le fonctionnement des moteurs à combustion interne, deviennent de plus en plus en plus sévères.

Les niveaux de performance requis pour les fonctions de contrôle moteur étant par conséquent de plus en plus exigeant, il devient nécessaire d'avoir une maîtrise de la quantité d'air admise dans le moteur en particulier lors des phases transitoires de fonctionnement du moteur.

En particulier dans le cas d'un moteur à combustion interne équipé d'un système de suralimentation tel qu'un turbocompresseur et l'une boucle de recirculation des gaz brûlés (encore désignée boucle EGR) vers l'admission équipée d'une vanne de contrôle du débit de gaz recirculés (encore désignée vanne EGR), la synchronisation de la vanne EGR lors des phases transitoires de fonctionnement du moteur avec la turbine du turbocompresseur est indispensable pour avoir cette maîtrise de la quantité d'air admise dans le moteur.

On connait par exemple le document WO2013111385 qui décrit un procédé dans lequel la commande de la position de la vanne EGR et de la turbine de turbocompresseur sont déterminées à partir du calcul d'un facteur d'oxygène en excès et modifiées en cas de détection d'une phase transitoire. Cependant un tel procédé ne tient pas compte du temps de réponse de la vanne EGR et donc ne permet pas un fonctionnement de la vanne EGR synchrone avec la turbine du turbocompresseur, avec une possibilité de retard sur le pilotage de la vanne EGR.

On connait encore le document DE102008036414 qui divulgue un procédé de pilotage d'une vanne de recirculation de gaz brûlés.

Lors des phases transitoires de fonctionnement du moteur, les impacts d'une mauvaise synchronisation de la vanne EGR avec la turbine du turbocompresseur sur le moteur sont :

- Un trou d'air lorsque la vanne de recirculation des gaz brûlés reste ouverte, ce qui engendre un trou de couple ressenti par le conducteur et donc pénalise l'agrément de conduite.
- Un surplus d'air lorsque la vanne de recirculation des gaz brûlés reste fermée, ce qui engendre des fumées à l'échappement et la formation de suies non maîtrisées.

Par conséquent, un objectif de l'invention est d'assurer en régime transitoire une bonne synchronisation entre la vanne EGR et la turbine du turbocompresseur.

Pour atteindre cet objectif, il est prévu selon l'invention un procédé de pilotage d'une vanne de recirculation des gaz brulés produits par un moteur à combustion interne, ce moteur comprenant :

une ligne d'admission d'air,
une ligne d'échappement des gaz brûlés,
une boucle de recirculation des gaz brulés s'étendant entre la ligne d'échappement et la ligne d'admission et comportant la vanne de recirculation,
un turbocompresseur comportant une turbine de détente des gaz brûlés disposée dans la ligne d'échappement,

Le procédé comprenant les étapes de :

détermination de la pression réelle en amont de la turbine,
détermination d'une consigne de contrôle du débit de gaz brûlés dans la turbine,
détermination de la pression attendue en amont de la turbine pour la consigne de contrôle du débit de gaz dans la turbine déterminée,
détermination d'une pression de référence en fonction de la pression attendue et de la pression réelle en amont de la turbine,
détermination de la consigne de contrôle de la vanne de recirculation à partir de la pression de référence déterminée,
pilotage de la vanne de recirculation à la consigne de contrôle déterminée,

l'étape détermination de la pression de référence comprenant une étape de filtrage de la pression attendue et en ce que la pression de référence est déterminée par la relation suivante :

$$P_f = P_{proj} - (P_{projfiltrée} - P_{rat}),$$

dans laquelle $P_{projfiltrée}$ est la pression attendue filtrée.

Dans une variante où la turbine comprend des aubes ajustables en position, la consigne de contrôle du débit de gaz brûlés dans la turbine correspond à une consigne de position des aubes.

En variante, l'étape de détermination de la pression attendue comprend les étapes supplémentaires de :

détermination d'une consigne de débit d'air,
détermination de la température en amont de la turbine,
détermination de la pression en aval de la turbine,
détermination de la pression attendue en fonction :

- d'une consigne de débit d'air normalisée obtenue à partir de la consigne de débit d'air, de la température en amont de la turbine et de la pression en aval de la turbine,
- du champ de fonctionnement de la turbine.

Dans une autre variante où la turbine comprend une vanne de décharge de turbine, la consigne de contrôle du débit de gaz brûlés dans la turbine correspond à une consigne d'ouverture de la vanne de décharge.

En variante, le filtrage est réglé de sorte que lorsque la pression des gaz brûlés en amont de la turbine n'est pas stabilisée, la pression de référence est égale à la pression attendue.

En variante, le filtrage est réglé de sorte que lorsque la pression des gaz brûlés en amont de la turbine est stabilisée, la pression de référence ($P_f$) est égale à la pression réelle ($P_{rat}$) en amont de la turbine (7).

De préférence, le filtrage de la pression attendue est effectué par un filtre du premier ordre.

L'invention porte aussi sur un calculateur électronique caractérisé en ce qu'il comprend les moyens d'acquisition, de traitement et de commande ainsi que les instructions logicielles requis à la mise en oeuvre du procédé selon l'une quelconque des variantes précédemment décrites.

L'invention porte encore sur un véhicule automobile comprenant un moteur à combustion interne, ce moteur comprenant :

une ligne d'admission d'air,
une ligne d'échappement des gaz brûlés,
une boucle de recirculation des gaz brulés s'étendant entre la ligne d'échappement et la ligne d'admission et comportant une vanne de recirculation,
un turbocompresseur comportant une turbine de détente des gaz brûlés disposée dans la ligne d'échappement,

caractérisé en ce qu'il comprend un calculateur de l'invention.

**Brève description des dessins**

D'autres particularités et avantages apparaîtront à la lecture de la description ci-après d'un mode particulier de réalisation, non limitatif de l'invention, faite en référence aux figures dans lesquelles :

- La figure 1 est une représentation schématique d'un moteur à combustion interne équipé d'une boucle de recirculation de gaz brulés et d'un turbocompresseur.
- La figure 2 est une représentation schématique d'un mode de réalisation du procédé de pilotage de la vanne de recirculation des brûlés.

**Description détaillée**

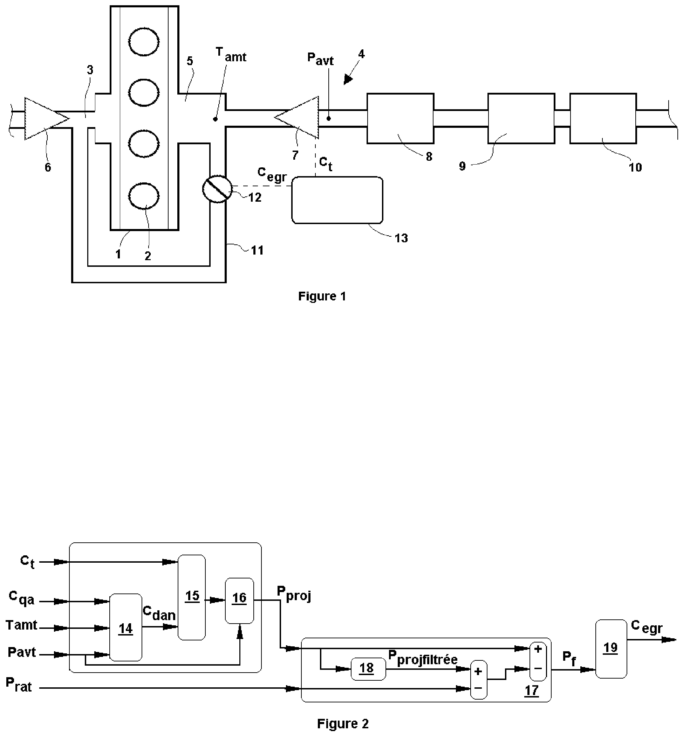

La figure 1 présente schématiquement un moteur 1 à combustion interne, par exemple un moteur à allumage par compression de type Diesel pouvant équiper un véhicule automobile. Le moteur 1 comprend classiquement au moins une chambre de combustion 2 destinée à recevoir l'air et le carburant nécessaire à la combustion. Sur la figure 1, quatre chambres de combustion sont représentées, mais le moteur peut comprendre un nombre différent de chambre de combustion. Le moteur 1 à combustion interne comprend une ligne d'admission d'air 3 permettant d'amener d'air d'admission dans les chambres de combustion 2. Le moteur 1 à combustion interne comprend également une ligne 4 d'échappement permettant l'évacuation des gaz d'échappement des chambres de combustion 2. La ligne 4 d'échappement comprend un collecteur d'échappement 5 par lequel elle est reliée au moteur 1 à combustion interne.

Le moteur 1 à combustion interne comprend encore un turbocompresseur dont le compresseur 6 d'air d'admission est disposé dans la ligne 3 d'admission d'air et la turbine 7 de détente est disposée dans la ligne 4 d'échappement. La turbine 7, est reliée au compresseur par un arbre commun de rotation, non représenté, et l'entrainement de la turbine 7 par les gaz brûlés circulant dans la ligne 4 d'échappement permet ainsi l'entrainement du compresseur 6 d'air d'admission.

La ligne 4 d'échappement peut encore comprendre au moins un organe de dépollution tel qu'un catalyseur d'oxydation 8, un catalyseur 9 de réduction sélective des oxydes d'azote, un filtre à particules 10.

Le moteur 1 comprend encore une boucle 11 de recirculation s'étendant entre la ligne 4 d'échappement et la ligne 3 d'admission et permettant de prélever une fraction des gaz brûlés de l'échappement afin de la ramener vers l'admission. La boucle de 11 de recirculation comporte une vanne 12 de recirculation. Le débit de gaz brûlés dans la boucle de recirculation 11 est contrôlé par la vanne 12 de recirculation. Plus précisément, la boucle 11 de recirculation s'étend de l'amont de la turbine 7 vers l'aval du compresseur 6 d'air d'admission.

Dans la ligne 3 d'admission, l'amont et l'aval sont définis relativement au sens d'écoulement de l'air admis vers le moteur 1. Dans la ligne 4 d'échappement, l'amont et l'aval sont définis relativement au sens d'écoulement des gaz brûlés évacués du moteur 1.

Le moteur 1 comporte encore un calculateur 13 comprenant les moyens d'acquisition, de traitement et de commande ainsi que les instructions logicielles adaptés à mettre en oeuvre les étapes du procédé de pilotage de la vanne 12 de recirculation de l'invention dont un mode de réalisation préféré est illustré à la figure 2. Le calculateur 13 est aussi adapté à piloter la turbine 7.

La figure 2 présente un mode de réalisation préféré du procédé dans un agencement où le turbocompresseur est dit à géométrie variable, c'est-à-dire qu'il comprend une turbine 7 comportant des aubes (non représentées) ajustables en position. L'ajustement de la position des aubes permet de réguler la circulation des gaz brûlés au niveau de l'entrée de la turbine, ajustant ainsi le débit afin d'optimiser la puissance de la turbine en fonction de la charge demandée.

Dans ce mode de réalisation, le procédé comprend tout d'abord des étapes de détermination de plusieurs variables d'entrée :

- la détermination, au moyen d'un capteur ou d'un estimateur, de la pression réelle, $P_{rat}$, des gaz brûlés en amont de la turbine 7.
- la détermination, au moyen d'un estimateur, d'une consigne de contrôle, $C_t$, du débit de gaz brûlés dans la turbine 7. Dans ce mode de réalisation la consigne de contrôle, $C_t$, du débit de gaz brûlés dans la turbine 7 correspond à une consigne de position des aubes de la turbine 7.

- la détermination, au moyen d'un estimateur, d'une consigne de débit d'air, $C_{da}$,
- la détermination, au moyen d'un capteur ou d'un estimateur, de la température, $T_{amt}$, en amont de la turbine 7,
- la détermination, au moyen d'un capteur ou d'un estimateur, de la pression, $P_{avt}$, en aval de la turbine 7,

Ensuite, à partir de la consigne de débit d'air, $C_{qa}$, de la température, $T_{amt}$ en amont de la turbine 7 et de la pression, $P_{avt}$, en aval de la turbine 7, on détermine (bloc 14, figure 2) une consigne de débit d'air normalisé $C_{dan}$. La consigne de débit d'air normalisé, $C_{dan}$, est obtenue par la relation :

$$C_{dan} = C_{da} \times \frac{\sqrt{R \times T_{amt}}}{P_{avt}}$$

Avec R = 287,058 J.kg$^{-1}$.K$^{-1}$, constante universelle des gaz parfaits.

A partir de cette consigne de débit d'air normalisé, $C_{dan}$, et de la consigne, $C_t$, de position des aubes de la turbine 7, il est possible de déterminer (bloc 15, figure 2) à l'aide du champ de fonctionnement de la turbine 7, qui peut être mémorisé dans une cartographie appropriée, un ratio Pression amont/Pression aval turbine, Ratio$_{amont/aval turbine}$, attendu, puis finalement de calculer (Bloc 16, figure 2) la pression, $P_{proj}$, attendue en amont de la turbine 7 pour la consigne $C_t$ déterminée de contrôle du débit de gaz brûlés dans la turbine 7 :

$$P_{proj} = P_{avt} \times Ratio_{\text{amont / aval turbine}}$$

Autrement dit lorsque la consigne $C_t$ est respectée, la pression en amont de la turbine 7 vaut $P_{proj}$, Le procédé permet donc de déterminer par anticipation la pression en amont de la turbine 7.

L'étape suivante (bloc 17, figure 2) consiste à déterminer une pression de référence, $P_f$, en fonction de la pression attendue, $P_{proj}$, et de la pression réelle, $P_{rat}$, en amont de la turbine 7. Cette pression de référence, $P_f$, est la valeur de pression de gaz brûlés en amont de la turbine 7 qui sera retenue pour la détermination de la consigne de contrôle, $C_{egr}$, de la vanne 12 de recirculation.

Plus précisément, à cette étape s'effectue une bascule dynamique entre la pression attendue, $P_{proj}$, et la pression réelle, $P_{rat}$, des gaz brûlés en amont de la turbine 7, ce qui évite d'avoir à déterminer un état transitoire / stabilisé en tant que tel et permet de disposer de la pression de référence, $P_f$, quel que soit le fonctionnement du moteur. ,

A cet effet, on détermine (bloc 18, figure 2) à partir de la pression attendue, $P_{proj}$, une pression attendue filtrée, $P_{projfiltrée}$, et on calcule la pression de référence, $P_f$, par la relation suivante :

$$P_f = P_{proj} - (P_{projfiltrée} - P_{rat})$$

Le filtrage de la pression attendue, $P_{proj}$, est effectué de préférence par un filtre du premier ordre. Le filtre est principalement passe-bas, pour supprimer le bruit haute fréquence. En pratique, le filtre est passe-bande. Le filtrage permet de simuler un retard temporel pour compenser le temps de réponse de la pression dans le collecteur échappement dû à la dynamique du turbocompresseur.

Le filtrage est réglé, par exemple au moyen d'une valeur appropriée de constante de temps du filtre, de sorte que :

- lorsque la pression des gaz brûlés en amont de la turbine 7 n'est pas stabilisée dans le temps, autrement dit que le moteur 1 fonctionne en régime transitoire, la pression attendue filtrée, $P_{projfiltrée}$, est égale à la pression réelle, $P_{rat}$, alors que la pression attendue $P_{proj}$, est en avance par rapport à la pression réelle, $P_{rat}$, (principe de l'anticipation basée sur la consigne et non sur la position de l'actionneur du turbocompresseur. Sur cette phase transitoire, la pression de référence, $P_f$, est égale à la pression attendue, $P_{proj}$.

- lorsque la pression des gaz brûlés en amont de la turbine 7 est stabilisée dans le temps, la pression attendue filtrée, $P_{projfiltrée}$, est égale à la pression attendue $P_{proj}$ ($P_{proj} = P_{projfiltrée}$), et donc la pression de référence, $P_f$, est égale à la pression réelle, $P_{rat}$, en amont de la turbine 7 ($P_f = P_{rat}$).

Une valeur de constante de temps du filtre comprise entre 300 et 500 ms convient (dans notre cas la convention est que la constante de temps représente la durée pour laquelle 2/3 de la valeur finale est atteinte).

A partir de la pression de référence, $P_f$, on détermine ensuite (bloc 19, figure 2) la consigne, $C_{egr}$, de contrôle de la vanne 12 de recirculation des gaz brûlés. Ainsi, en transitoire, avec sensiblement la valeur de la pression attendue, $P_{proj}$, comme pression de référence, $P_f$, on anticipe ainsi sur la consigne de contrôle de la vanne 12 de recirculation afin de compenser le temps de réponse de l'actionnement de la vanne 12 de recirculation et donc d'avoir au final une meilleure synchronisation de la vanne 12 de recirculation avec la turbine 7 et par conséquent un meilleur contrôle du taux de gaz recirculés (donc finalement sur le débit d'air admis dans le moteur). De même en stabilisé, avec la valeur de la pression réelle, $P_{rat}$, comme pression de référence, $P_f$, on assure la précision et la stabilité sur le contrôle du taux de gaz recirculés et donc finalement sur le débit d'air.

Finalement on pilote (cf figure 1) la vanne 12 de recirculation à la consigne de contrôle, $C_{egr}$, déterminée.

L'invention ne se limite pas au mode de réalisation décrit. En variante, le moteur peut aussi être du type à allumage commandé. Dans une autre variante où le turbocompresseur ne dispose pas d'aubes ajustables, mais d'une soupape de décharge (communément désigné par les motoristes par le terme anglo-saxon de wastegate) qui limite la pression des gaz d'échappement sur la roue de turbine du turbocompresseur, la consigne de contrôle du débit de gaz brûlés dans la turbine correspond à une consigne d'ouverture de la vanne de décharge. La soupape de décharge contrôle le débit de gaz brûlés dans la turbine en ouvrant une dérivation des gaz d'échappement afin qu'ils ne passent plus par la turbine, ce qui permet de limiter sa vitesse de rotation, donc aussi la vitesse de rotation de la roue du compresseur.

L'invention permet un gain en dynamique sur le contrôle de la quantité d'air admise par le moteur lors des phases de fonctionnement en régime transitoire. L'invention, avec la présence de la bascule dynamique permet de maintenir la prestation lors des phases de fonctionnement du moteur en régime stabilisé.

**Revendications**

1. Procédé de pilotage d'une vanne (12) de recirculation des gaz brulés produits par un moteur (1) à combustion interne, ce moteur (1) comprenant :

- une ligne (3) d'admission d'air,
- une ligne (4) d'échappement des gaz brûlés,
- une boucle (11) de recirculation des gaz brulés s'étendant entre la ligne (4) d'échappement et la ligne (3) d'admission et comportant la vanne (12) de recirculation,
- un turbocompresseur comportant une turbine (7) de détente des gaz brûlés disposée dans la ligne (4) d'échappement,

Le procédé comprenant les étapes de :

- détermination d'une pression réelle ($P_{rat}$) en amont de la turbine (7),
- détermination d'une consigne de contrôle ($C_t$) du débit de gaz brûlés dans la turbine (7),
- détermination d'une pression attendue ($P_{proj}$) en amont de la turbine (7) pour la consigne (Ct) de contrôle du débit de gaz dans la turbine (7) déterminée,
- détermination d'une pression de référence ($P_f$) en fonction de la pression attendue ($P_{proj}$) et de la pression réelle ($P_{rat}$) en amont de la turbine (7),
- détermination d'une consigne de contrôle ($C_{egr}$) de la vanne (12) de recirculation à partir de la pression de référence ($P_f$) déterminée,
- pilotage de la vanne (12) de recirculation à la consigne de contrôle ($C_{egr}$) déterminée,
avec l'étape détermination de la pression de référence (Pf) comprenant une étape de filtrage de la pression attendue (Pproj)
étant **caractérisé en ce que** la pression de référence (Pf) est déterminée par la relation suivante :

$$P_f = P_{proj} - (P_{projfiltrée} - P_{rat}) \, ,$$

dans laquelle $P_{projfiltrée}$ est la pression attendue filtrée.

2. Procédé selon la revendication 1, **caractérisé en ce que** la turbine (7) comprenant des aubes ajustables en position, la consigne de contrôle ($C_t$) du débit de gaz brûlés dans la turbine (7) correspond à une consigne de position des aubes.

3. Procédé selon la revendication 2, **caractérisé en ce que** l'étape de détermination de la pression attendue ($P_{proj}$) comprend les étapes supplémentaires de :

- détermination d'une consigne de débit d'air ($C_{qa}$),
- détermination d'une température ($T_{amt}$) en amont de la turbine (7),
- détermination d'une pression ($P_{avt}$) en aval de la turbine (7),
- détermination de la pression attendue ($P_{proj}$) en fonction :

- d'une consigne de débit d'air normalisée obtenue à partir de la consigne de débit d'air ($C_{qa}$), de la température ($T_{amt}$) en amont de la turbine (7) et de la pression ($P_{avt}$) en aval de la turbine (7),
- du champ de fonctionnement de la turbine (7).

4. Procédé selon la revendication 1, **caractérisé en ce que** la turbine (7) comprenant une vanne de décharge de turbine, la consigne de contrôle ($C_t$) du débit de gaz brûlés dans la turbine (7) correspond à une consigne d'ouverture de la vanne de décharge.

5. Procédé selon l'une quelconque des revendications précédentes, **caractérisé en ce que** le filtrage est réglé de sorte que lorsque la pression des gaz brûlés en amont de la turbine (7) n'est pas stabilisée, la pression de référence ($P_f$) est égale à la pression attendue ($P_{proj}$).

6. Procédé selon l'une quelconque des revendications précédentes, **caractérisé en ce que** le filtrage est réglé de sorte que lorsque la pression des gaz brûlés en amont de la turbine (7) est stabilisée, la pression de référence ($P_f$) est égale à la pression réelle ($P_{rat}$) en amont de la turbine (7).

7. Procédé selon l'une quelconque des revendications précédentes, **caractérisé en ce que** le filtrage de la pression attendue ($P_{proj}$) est effectué par un filtre du premier ordre.

8. Calculateur électronique **caractérisé en ce qu'**il comprend les moyens d'acquisition, de traitement et de commande ainsi que les instructions logicielles requis à la mise en oeuvre du procédé selon l'une quelconque des revendications précédentes.

9. Véhicule automobile comprenant un moteur (1) à combustion interne, ce moteur (1) comprenant :

- une ligne (3) d'admission d'air,
- une ligne (4) d'échappement des gaz brûlés,
- une boucle (11) de recirculation des gaz brulés s'étendant entre la ligne (4) d'échappement et la ligne (3) d'admission et comportant une vanne (12) de recirculation,
- un turbocompresseur comportant une turbine (7) de détente des gaz brûlés disposée dans la ligne (4) d'échappement,

**caractérisé en ce qu'**il comprend un calculateur selon la revendication précédente.

## Patentansprüche

1. Verfahren zur Ventilsteuerung (12) zur Rückführung der Abgase, die von einem Verbrennungsmotor (1) erzeugt werden, wobei dieser Motor (1) umfasst:

- eine Lufteinlassleitung (3),
- eine Abgasablassleitung (4),
- eine Rückführungsschleife (11) der Abgase, die sich zwischen der Ablassleitung (4) und der Einlassleitung (3) erstreckt und das Rückführungsventil (12) umfasst,
- einen Turbokompressor, umfassend eine Expansionsturbine (7) für die Abgase, die in der Auslassleitung (4) angeordnet ist,

wobei das Verfahren die folgenden Schritte umfasst:

- Bestimmung eines realen Drucks ($P_{rat}$) stromaufwärts zur Turbine (7),
- Bestimmung eines Kontrollsollwerts ($C_t$) der Abgasmenge in der Turbine (7),
- Bestimmung eines erwarteten Drucks ($P_{proj}$) stromaufwärts zur Turbine (7) für den bestimmten Kontrollsollwert ($C_t$) der Gasmenge in der Turbine (7),
- Bestimmung eines Referenzdrucks ($P_f$) in Abhängigkeit vom erwarteten Druck ($P_{proj}$) und vom realen Druck ($P_{rat}$) stromaufwärts zur Turbine (7),
- Bestimmung eines Kontrollsollwerts ($C_{egr}$) des Rückführungsventils (12) auf Basis des bestimmten Referenzdrucks ($P_f$),
- Steuerung des Rückführungsventils (12) auf den bestimmten Kontrollsollwert ($C_{egr}$),
mit dem Schritt der Bestimmung des Referenzdrucks ($P_f$), umfassend einen Filterschritt des erwarteten Drucks ($P_{proj}$),
**dadurch gekennzeichnet, dass** der Referenzdruck ($P_f$) durch folgendes Verhältnis bestimmt wird:

$$P_f = P_{proj} - (P_{projfiltrée} - P_{rat})$$

wobei $P_{projfiltrée}$ der erwartete gefilterte Druck ist.

2. Verfahren nach Anspruch 1, **dadurch gekennzeichnet, dass**, da die Turbine (7) hinsichtlich der Position justierbare Schaufeln umfasst, der Kontrollsollwert ($C_t$) der Abgasmenge in der Turbine (7) einem Positionssollwert der Schaufeln entspricht.

3. Verfahren nach Anspruch 2, **dadurch gekennzeichnet, dass** der Schritt der Bestimmung des erwarteten Drucks ($P_{proj}$) die folgenden zusätzlichen Schritte umfasst:

- Bestimmung eines Luftmengensollwerts ($C_{qa}$),
- Bestimmung einer Temperatur ($T_{amt}$) stromaufwärts zur Turbine (7),
- Bestimmung eines Drucks ($P_{avt}$) stromabwärts zur Turbine (7),

- Bestimmung des erwarteten Drucks (P$_{proj}$) in Abhängigkeit von:
- einem genormten Luftmengensollwert, der auf Basis des Luftmengensollwerts (C$_{qa}$), der Temperatur (T$_{amt}$) stromaufwärts zur Turbine (7) und des Drucks (P$_{avt}$) stromabwärts zur Turbine (7) erhalten wird,
- dem Funktionsfeld der Turbine (7).

4. Verfahren nach Anspruch 1, **dadurch gekennzeichnet, dass**, da die Turbine (7) ein Turbinenablassventil umfasst, der Kontrollsollwert (C$_t$) der Abgasmenge in der Turbine (7) einem Öffnungssollwert des Ablassventils entspricht.

5. Verfahren nach einem der vorhergehenden Ansprüche, **dadurch gekennzeichnet, dass** die Filterung derart eingestellt ist, dass, wenn der Druck der Abgase stromaufwärts zur Turbine (7) nicht stabilisiert ist, der Referenzdruck (P$_f$) gleich dem erwarteten Druck (P$_{proj}$) ist.

6. Verfahren nach einem der vorhergehenden Ansprüche, **dadurch gekennzeichnet, dass** die Filterung derart eingestellt ist, dass, wenn der Druck der Abgase stromaufwärts zur Turbine (7) stabilisiert ist, der Referenzdruck (P$_f$) gleich dem realen Druck (P$_{rat}$) stromaufwärts zur Turbine (7) ist.

7. Verfahren nach einem der vorhergehenden Ansprüche, **dadurch gekennzeichnet, dass** die Filterung des erwar-teten Drucks (P$_{proj}$) durch einen Filter erster Ordnung erfolgt.

8. Elektronischer Rechner, **dadurch gekennzeichnet, dass** er die Mittel zur Erfassung, Bearbeitung und Steuerung sowie die erforderlichen Software-Anweisungen für den Einsatz des Verfahrens nach einem der vorhergehenden Ansprüche umfasst.

9. Kraftfahrzeug, umfassend einen Verbrennungsmotor (1), wobei dieser Motor (1) umfasst:

- eine Lufteinlassleitung (3),
- eine Abgasauslassleitung (4),
- eine Rückführungsschleife (11) der Abgase, die sich zwischen der Auslassleitung (4) und der Einlassleitung (3) erstreckt und ein Rückführungsventil (12) umfasst,
- einen Turbokompressor, umfassend eine Expansionsturbine (7) für die Abgase, die in der Auslassleitung (4) angeordnet ist,
**dadurch gekennzeichnet, dass** es einen Rechner nach dem vorhergehenden Anspruch umfasst.

**Claims**

1. A method for controlling a valve (12) for recirculating burnt gases produced by an internal combustion engine (1), this engine (1) including:

- an air intake line (3),
- an exhaust line (4) of the burnt gases,
- a recirculation loop (11) of the burnt gases extending between the exhaust line (4) and the intake line (3) and comprising the recirculation valve (12),
- a turbocharger comprising an expansion turbine (7) of the burnt gases disposed in the exhaust line (4),

the method including the steps of:

- determining an actual pressure (P$_{rat}$) upstream of the turbine (7),
- determining a control setpoint (C$_t$) of the flow of burnt gases in the turbine (7),
- determining an expected pressure (P$_{proj}$) upstream of the turbine (7) for the determined control setpoint (C$_t$) of the flow of gas in the turbine (7),
- determining of a reference pressure (P$_f$) as a function of the expected pressure (P$_{proj}$) and of the actual pressure (P$_{rat}$) upstream of the turbine (7),
- determining of a control setpoint (C$_{egr}$) of the recirculation valve (12) from the determined reference pressure (P$_f$),
- controlling the recirculation valve (12) with the determined control setpoint (C$_{egr}$),
with the step of determining the reference pressure (P$_f$) including a filtering step of the expected pressure (P$_{proj}$) being **characterized in that** the reference pressure (P$_f$) is determined by the following relationship:

$$P_f = P_{proj} - (P_{projfiltrée} - P_{rat}),$$

in which $P_{projfiltrée}$ is the expected filtered pressure.

2. The method according to Claim 1, **characterized in that** the turbine (7) including blades which are adjustable in position, the control setpoint ($C_t$) of the flow of burnt gases in the turbine (7) corresponds to a position setpoint of the blades.

3. The method according to Claim 2, **characterized in that** the step of determining the expected pressure ($P_{proj}$) includes the supplementary steps of:

- determining an air flow setpoint ($C_{qa}$),
- determining a temperature ($T_{amt}$) upstream of the turbine (7),
- determining a pressure ($P_{avt}$) downstream of the turbine (7),
- determining the expected pressure ($P_{proj}$) as a function:
- of a normalized air flow setpoint obtained from the air flow setpoint ($C_{qa}$), of the temperature ($T_{amt}$) upstream of the turbine (7) and of the pressure ($P_{avt}$) downstream of the turbine (7),
- of the operating field of the turbine (7).

4. The method according to Claim 1, **characterized in that** the turbine (7) including a turbine discharge valve, the control setpoint ($C_t$) of the flow of burnt gases in the turbine (7) corresponds to an opening setpoint of the discharge valve.

5. The method according to any one of the preceding claims, **characterized in that** the filtering is regulated such that when the pressure of the burnt gases upstream of the turbine (7) is not stabilized, the reference pressure ($P_f$) is equal to the expected pressure ($P_{proj}$) .

6. The method according to any one of the preceding claims, **characterized in that** the filtering is regulated such that when the pressure of the burnt gases upstream of the turbine (7) is stabilized, the reference pressure ($P_f$) is equal to the actual pressure ($P_{rat}$) upstream of the turbine (7).

7. The method according to any one of the preceding claims, **characterized in that** the filtering of the expected pressure ($P_{proj}$) is carried out by a filter of the first order.

8. An electronic computer, **characterized in that** it includes the means of acquisition, processing and controlling and also the software instructions required at the implementation of the method according to any one of the preceding claims.

9. A motor vehicle including an internal combustion engine (1), this engine (1) including:

- an air intake line (3),
- an exhaust line (4) of the burnt gases,
- a recirculation loop (11) of the burnt gases extending between the exhaust line (4) and the intake line (3) and comprising a recirculation valve (12),
- a turbocharger comprising an expansion turbine (7) of the burnt gases disposed in the exhaust line (4),
**characterized in that** it includes a computer according to the preceding claim.

Figure 1

Figure 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2013111385 A

- DE 102008036414